# EUROPEAN PATENT SPECIFICATION

(11) **EP 4 530 997 B1**
(45) Date of publication and mention of the grant of the patent: **11.11.2026**
(21) Application number: 24202759.7
(22) Date of filing: 26.09.2024
(51) Int. Cl.: G06V 20/58, G06V 10/30, G06V 10/60, G06V 10/762

(54) **MOBILE OBJECT CONTROL DEVICE, MOBILE OBJECT CONTROL METHOD, AND STORAGE MEDIUM**
MOBILE OBJEKTSTEUERUNGSVORRICHTUNG, MOBILES OBJEKTSTEUERUNGSVERFAHREN UND SPEICHERMEDIUM
DISPOSITIF DE COMMANDE D'OBJET MOBILE, PROCÉDÉ DE COMMANDE D'OBJET MOBILE ET SUPPORT DE STOCKAGE

(30) Priority: 29.09.2023 JP 2023169549
(43) Date of publication of application: 02.04.2025
(73) Proprietor: HONDA MOTOR CO., LTD., Tokyo 105-8404 (JP)
(72) Inventor: TSUDA, Kohei, Saitama 351-0193 (JP)
(74) Representative: Weickmann & Weickmann PartmbB

(56) References cited:
- JP-A- 2013 196 171
- DONGSHIN KIM ET AL: "Traversability classification using unsupervised on-line visual learning for outdoor robot navigation", 2006 IEEE INTERNATIONAL CONFERENCE ON ROBOTICS AND AUTOMATION (ICRA) : ORLANDO, FLORIDA, 15 - 19 MAY 2006, IEEE OPERATIONS CENTER, PISCATAWAY, NJ, 15 May 2006 (2006-05-15), pages 518 - 525, XP010921325, ISBN: 978-0-7803-9505-3, DOI: 10.1109/ROBOT.2006.1641763

## Description

### CROSS-REFERENCE TO RELATED APPLICATION

Priority is claimed on Japanese Patent Application No. 2023-169549, filed September 29, 2023.

### BACKGROUND

### Field of the Invention

The present invention relates to a mobile object control device, a mobile object control method, and a storage medium.

### Description of Related Art

Conventionally, a technology is proposed in which points corresponding to candidate obstacles determined based on an output of LIDAR equipment (hereinafter referred to as "corresponding points") are projected onto an area of a horizontal plane and associated with grid cells on the horizontal plane, and a first candidate obstacle set corresponding to noise is removed from the candidate obstacles based on a situation of the association between the corresponding points and the grid cells (Published Japanese Translation No. 2023-517105 of the PCT International Publication).

Further, JP 2013 196171 A discloses a conventional mobile object control device used to detect a vehicle traveling in a lane area set on a road.

### SUMMARY

However, in the conventional technology, light source noise may not be properly recognized from candidate obstacles, and light source noise may not be appropriately removed.

The present invention has been made in consideration of these circumstances, and aims to provide a mobile object control device, a mobile object control method, and a storage medium that can recognize or remove light source noise with higher accuracy.

A mobile object control device, a mobile object control method, and a storage medium according to the present invention have adopted the following configuration.

A mobile object control device according to claim 1.

In the aspect described above, the hardware processor may calculate a curve representing the distribution and determine whether light source noise is included in a point group in the predetermined area based on the number of maximum points that the curve has in the noise determination processing.

In the aspect described above, when the hardware processor determines that light source noise is included in a point group in the predetermined area based on the number of maximum points, the hardware processor may remove the light source noise from the point group in the predetermined area.

In the aspect described above, the hardware processor may recognize surroundings of the mobile object as a set of unit areas of the same size, manage a presence or absence of the object in the unit area based on an occupancy state of the unit area, and execute the noise determination processing for each unit area.

In the aspect described above, the hardware processor may recognize candidate areas for the moving object by clustering of point groups recognized from the image, and recognize candidate areas of a predetermined size or smaller as candidate areas for the light source noise.

In the aspect described above, the hardware processor may execute the noise determination processing for each unit area included in the candidate area for the light source noise.

In the aspect described above, the control device may determine that light source noise is included in a point group in the predetermined area when the number of maximum points of the curve is two.

A mobile object control method according to claim 4.

A storage medium according to claim 5.

According to the aspects described above, it is possible to remove light source noise with higher accuracy.

### BRIEF DESCRIPTION OF THE DRAWINGS

FIG. 1 is a diagram which shows an example of a configuration of a mobile object system including a mobile object.
FIG. 2 is a diagram for describing an example of a use form of a mobile object.
FIG. 3 is a perspective view which shows a mobile object.
FIG. 4 is a diagram which shows an example of a functional configuration of the mobile object.
FIG. 5 is a diagram which shows an example of light source noise that may be included in a result of recognition by a recognizer.
FIG. 6 is a flowchart which shows an example of a flow of processing in which the recognizer recognizes a moving object around a mobile object while removing light source noise.
FIG. 7 is a diagram which shows an example of a recognition result of an object candidate area.
FIG. 8 is a diagram which shows an example of an object candidate area extracted as light source noise candidate area.
FIG. 9 is a diagram which describes a method for removing a point group corresponding to light source noise from light source noise candidate area.

### DESCRIPTION OF EMBODIMENTS

Hereinafter, embodiments of a mobile object control device, a mobile object control method, and a storage medium of the present invention will be described with reference to the drawings.

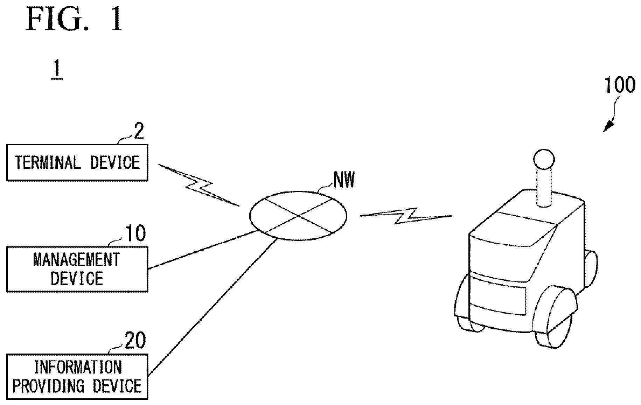

FIG. 1 is a diagram which shows an example of a configuration of a mobile object system 1 including a mobile object 100. The mobile object system 1 includes, for example, one or more terminal devices 2, a management device 10, an information providing device 20, and one or more mobile objects 100. These perform communication, for example, via a network NW. The network NW is, for example, any network such as an LAN, a WAN, or an Internet line.

### [Terminal device]

The terminal device 2 is, for example, a computer device such as a smartphone or a tablet terminal. For example, the terminal device 2 requests authority to use a mobile object 100 from a management device 10 or acquires information indicating that the use has been permitted based on an operation of a user.

### [Management device]

The management device 10 grants authority to use the mobile object 100 to the user of the terminal device 2 and manages reservations for the use of the mobile object 100 in response to a request from the terminal device 2. The management device 10 generates and manages, for example, schedule information in which identification information of a user registered in advance is associated with a date and time of the reservations for the use of the mobile object 100.

### [Information providing device]

The information providing device 20 provides the mobile object 100 with a position where the mobile object 100 is present, an area where the mobile object 100 moves, and map information around the area. The information providing device 20 may generate a route to a destination of the mobile object 100 in response to a request from the mobile object 100, and may provide the generated route to the mobile object 100.

### [Mobile object]

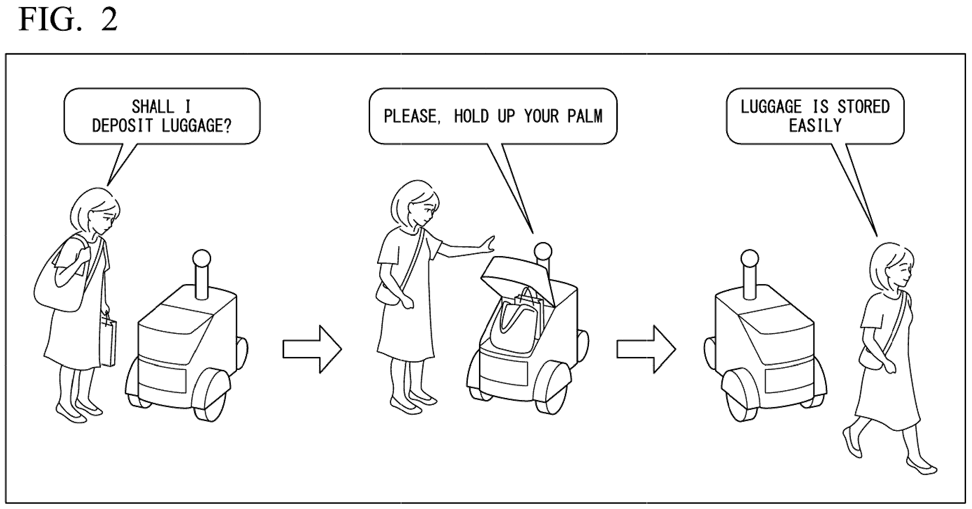

The mobile object 100 is used by the user in the following manner. FIG. 2 is a diagram for describing an example of a use form of the mobile object 100. The mobile object 100 is disposed, for example, at a predetermined position in a facility or town. When the user wants to use the mobile object 100, he or she can start using the mobile object 100 by operating an operation unit (not shown) of the mobile object 100 or by operating the terminal device 2. For example, when the user goes shopping and has a lot of luggage, he or she starts using the mobile object 100 and puts the luggage into a storage of the mobile object 100. The mobile object 100 then moves along with the user so as to autonomously follow the user. The user can continue shopping or head to a next destination with the luggage stored in the mobile object 100. For example, the mobile object 100 moves along with the user on a sidewalk and a road crosswalk. The mobile object 100 can move in areas where pedestrians can pass, such as roadways and sidewalks. For example, the mobile object 100 may be used in indoor or outdoor facilities such as shopping centers, airports, parks, and theme parks, and private land, and is capable of moving in areas where pedestrians can pass.

**In** addition to (or instead of) a following mode in which the mobile object 100 follows the user as described above, the mobile object 100 may be able to move autonomously in a mode such as a guidance mode or an emergency mode.

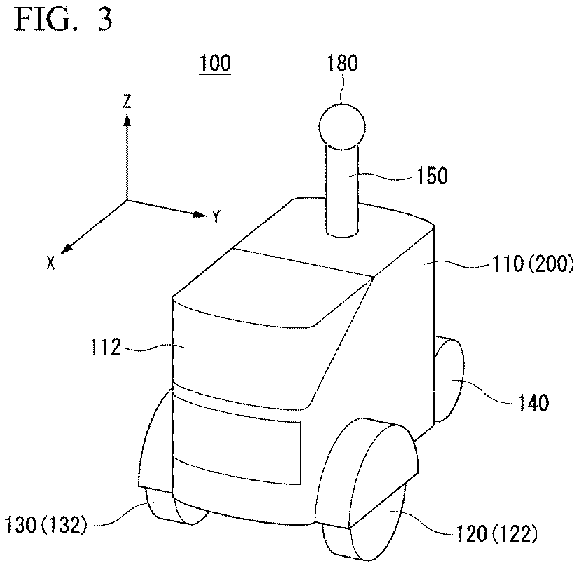

FIG. 3 is a perspective view which shows the mobile object 100. **In the** following description, a forward direction of the mobile object 100 is described as a plus x direction, a backward direction of the mobile object 100 is described as a minus x direction, a width direction of the mobile object 100 is described with a left direction with respect to the plus x direction as a plus y direction and a right direction as a minus y direction, and a height direction of the mobile object 100, which is orthogonal to the x and y directions, is a plus z direction.

The mobile object 100 includes, for example, a base 110, a door 112 provided on the base 110, and wheels (a first wheel 120, a second wheel 130, and a third wheel 140) assembled on the base 110. For example, the user can open the door 112 and put luggage into or take out luggage from the storage provided in the base 110. The first wheel 120 and the second wheel 130 are driving wheels, and the third wheel 140 is an auxiliary wheel (driven wheel). The mobile object 100 may be movable using a constituent other than wheels, such as an infinite trajectory.

A cylindrical support 150 extending in the plus z direction is provided in the plus z direction surface of the base 110. A camera 180 for capturing an image of the surroundings of the mobile object 100 is provided at an end of the support 150 in the plus z direction. A position where the camera 180 is provided may be any position different from the description above.

The camera 180 is, for example, a camera that can image the surroundings of the mobile object 100 at a wide angle (for example, 360 degrees). The camera 180 may include a plurality of cameras. The camera 180 may be realized by, for example, combining a plurality of 120-degree cameras or a plurality of 60-degree cameras.

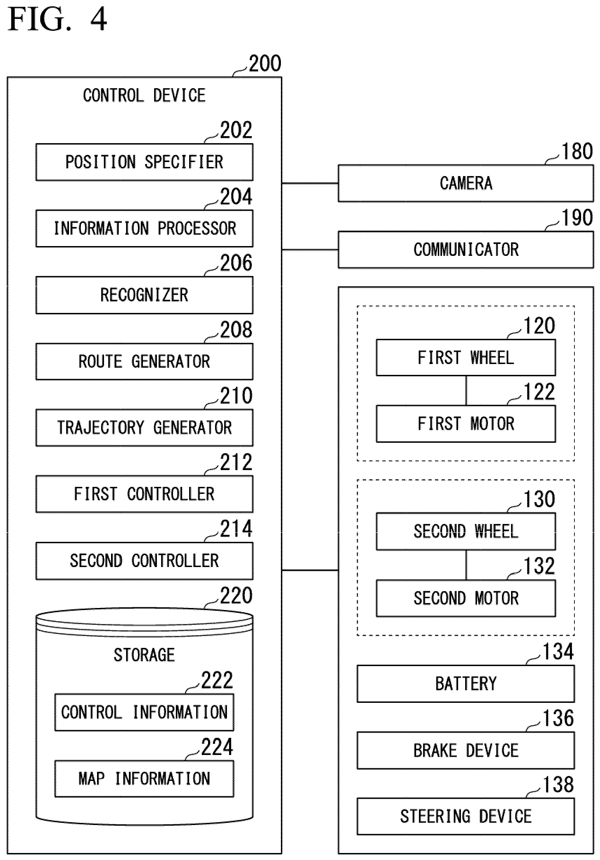

FIG. 4 is a diagram which shows an example of a functional configuration of the mobile object 100. **In** addition to the functional configuration shown in FIG. 3, the mobile object 100 further includes a first motor 122, a second motor 132, a battery 134, a brake device 136, a steering device 138, a communicator 190, and a control device 200. The first motor 122 and the second motor 132 are operated by electric power supplied to the battery 134. The first motor 122 drives the first wheel 120 and the second motor 132 drives the second wheel 130. The first motor 122 may be an in-wheel motor provided on a wheel of the first wheel 120, and the second motor 132 may be an in-wheel motor provided on a wheel of the second wheel 130.

The brake device 136 outputs a brake torque to each wheel based on an instruction from the control device 200. The steering device 138 includes an electric motor. The electric motor changes a course of the mobile object 100 by, for example applying force to a rack and pinion mechanism, based on an instruction from the control device 200 and changing a direction of the first wheel 120 or the second wheel 130.

The communicator 190 is a communication interface for communicating with the terminal device 2, the management device 10, or the information providing device 20.

### [Control device]

The control device 200 includes, for example, a position specifier 202, an information processor 204, a recognizer 206, a route generator 208, a trajectory generator 210, a first controller 212, a second controller 214, and a storage 220. The position specifier 202, the information processor 204, the recognizer 206, the route generator 208, the trajectory generator 210, the first controller 212, and the second controller 214 are realized by, for example, a hardware processor such as a central processing unit (CPU) executing a program (software). Some or all of these components may be realized by hardware (circuit parts; including circuitry) such as large scale integration (LSI), an application specific integrated circuit (ASIC), a field-programmable gate array (FPGA), and a graphics processing unit (GPU), or may be realized by software and hardware in cooperation. The program may be stored in advance in a storage device (storage device having a non-transitory storage medium) such as a hard disk drive (HDD) or flash memory, or in a removable storage medium (non-transitory storage medium) such as a DVD or CD-ROM, and may be installed by attaching the storage medium to a drive device.

The storage 220 is realized by a storage device such as an HDD, a flash memory, or a random access memory (RAM). The storage 220 stores control information 222 and map information 224, which are control programs for controlling a behavior of the mobile object 100 referred to by the first controller 212 and the second controller 214. The map information 224 is, for example, map information provided by the information providing device 20, such as a position where the mobile object 100 is present, an area where the mobile object 100 moves, and a vicinity of the area. The map information may include areas in which the mobile object 100 can move and areas in which the mobile object 100 cannot move (such as statically disposed obstacles or no-entry areas).

Some or all of the route generator 208, the trajectory generator 210, the first controller 212, and the second controller 214 are examples of "controllers." Some or all of the functional constituents included in the control device 200 may be included in another device. For example, other devices and the mobile object 100 may communicate and cooperate to control the mobile object 100.

The position specifier 202 specifies a position of the mobile object 100. The position specifier 202 acquires position information of the mobile object 100 using a global positioning system (GPS) device (not shown) built into the mobile object 100. The position information may be, for example, two-dimensional map coordinates or latitude and longitude information.

The information processor 204 manages information acquired from, for example, the terminal device 2, the management device 10, or the information providing device 20.

For example, the recognizer 206 recognizes a position of an object around the mobile object 100 (a distance from the mobile object 100 and a direction with respect to the mobile object 100) and states thereof such as a speed and acceleration, based on an image captured by the camera 180. The object includes a traffic participant, an obstacle within a facility and on a road, and the like. The obstacle includes a static obstacle included in map information and a dynamic obstacle not included in the map information. The recognizer 206 recognizes and tracks the user of the mobile object 100. For example, the recognizer 206 tracks the user based on an image (for example, a facial image of the user) captured by the user registered when the user uses the mobile object 100, or a facial image of the user (or features obtained from the facial image of the user) provided by the terminal device 2 or the management device 10. The recognizer 206 recognizes gestures made by the user. The mobile object 100 may be provided with a detector different from the camera, such as a radar device or LIDAR. **In** this case, the recognizer 206 recognizes a surrounding situation of the mobile object M using a result of detection by a radar device or **LIDAR** instead of (or in addition to) the image.

The route generator 208 generates a route to a destination specified by the user. The destination may be a product location or a facility location. **In** this case, the user specifies a product or facility, and thereby the mobile object 100 sets the location of the specified product or facility as the destination. A route is a route that can reasonably reach a destination. For example, a distance to the destination, time that will be taken to reach the destination, an ease of passing the route, and the like are scored, and routes whose scores and an integrated score of each score are equal to or greater than a threshold value are derived.

The trajectory generator 210 generates a trajectory on which the mobile object 100 needs to travel in the future based on, for example, gestures of the user, a destination set by the user, surrounding objects, a position of the user, and the like. The trajectory generator 210 generates a trajectory that allows the mobile object 100 to move smoothly to a target point. For example, the trajectory generator 210 generates a trajectory according to the behavior of the mobile object 100 based on a predetermined correspondence relationship between gestures and behaviors, or generates a trajectory for heading to a destination while avoiding surrounding objects. The trajectory generator 210 generates, for example, a trajectory for following a user who is tracked or a trajectory for leading the user. The trajectory generator 210 generates a trajectory according to the behavior based on, for example, a preset mode. The trajectory generator 210 generates a plurality of trajectories according to the behavior of the mobile object 100, calculates a risk for each trajectory, and adopts a trajectory that satisfies a criterion as a trajectory on which the mobile object 100 moves when a total value of the calculated risks or a risk of each trajectory point meets a preset criterion (for example, when the total value is equal to or less than a threshold value Th1 and the risk of each trajectory point is equal to or less than a threshold value Th2). For example, the risk tends to be increased as a distance from a trajectory (a trajectory point of a trajectory) to an obstacle is smaller, and the risk tends to be decreased as the distance from the trajectory to the obstacle is larger.

The first controller 212 controls motors (the first motor 122 and the second motor 132), the brake device 136, and the steering device 138 so that the mobile object 100 travels along a trajectory that satisfies a reference set in advance.

Based on a result of the recognition by the recognizer 206, the second controller 214 controls the mobile object 100 such that the mobile object 100 does not come into contact with surrounding objects and a distance between the user and the mobile object 100 is within a predetermined distance range. The predetermined distance range is a distance range between a preset shortest distance Dmin and a longest distance Dmax. The shortest distance Dmin and the longest distance Dmax may be, for example, variable distances depending on a type of operation control (following control, guidance control, and the like), surrounding conditions (a shape of moving route, a degree of crowding), and the like, or may be fixed distances.

### [Light source noise]

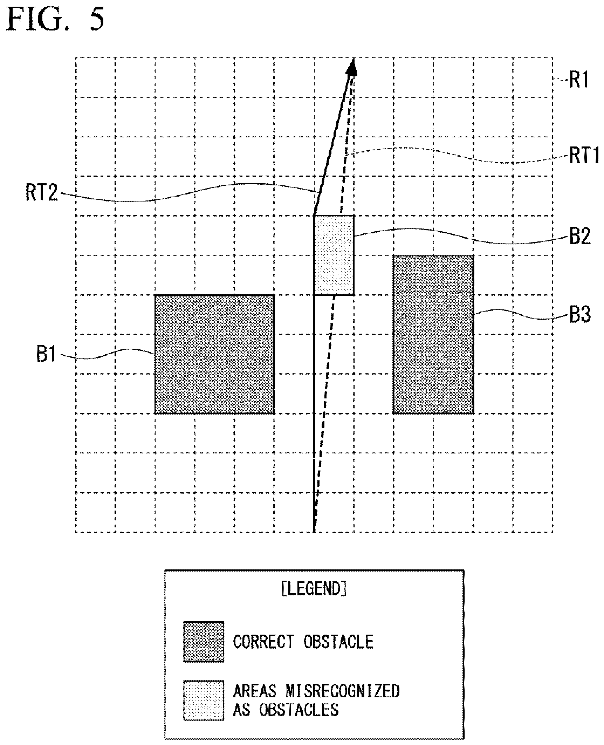

As described above, the recognizer 206 recognizes objects around the mobile object 100 based on an image captured by the camera 180. However, when there is a light source such as light or a window around the mobile object 100, the image captured by the camera 180 may include light source noise such as so-called blown-out highlights, depending on the position and direction of the mobile object 100. FIG. 5 is a diagram which shows an example of light source noise that may be included in the result of the recognition by the recognizer 206. The recognizer 206 manages a surrounding area of the mobile object 100 as a set of grid cells of a predetermined size, and also manages the presence or absence of an object according to a state of each grid. For example, in the example of FIG. 5, the presence of an object is represented by a grid cell in an occupied state, and the absence of an object is represented by a grid cell in an unoccupied state. FIG. 5 represents a grid plane (hereinafter referred to as an "occupancy grid diagram") in which a surrounding area R1 of the mobile object 100 at a certain point in time is viewed overhead in a height direction. Here, each grid cell (or an area corresponding to each grid) of the occupancy grid diagram is an example of a "unit area."

In managing the presence or absence of an obstacle using the occupancy grid diagram, a road surface on which the mobile object 100 is traveling is not treated as an object that can affect an occupancy state of each grid. That is, the recognizer 206 recognizes the road surface on which the mobile object 100 can travel (hereinafter referred to as a "traveling road surface") around the mobile object 100 based on an image captured by the camera 180, the map information 224, and the like, and recognizes the occupancy state of each grid cell depending on the presence or absence of an object other than the traveling road surface. For example, the recognizer 206 can three-dimensionally recognize a point group corresponding to an object present in the vicinity based on the image captured by the camera 180, the map information 224, and the like, and recognize a point group corresponding to the traveling road surface based on a position of the point groups in a height direction.

FIG. 5 represents a situation where obstacles B1, B2, and B3 are recognized in the area R1. Among these obstacles, obstacles B1 and B3 represent correctly recognized obstacles, and an obstacle B2 represents light source noise that was incorrectly recognized as an obstacle. If such a misrecognition of an obstacle occurs due to light source noise, an area that can originally be used as a travel route of the mobile object 100 becomes an impassable area, making it impossible to set an appropriate travel route. For example, in the example shown in FIG. 5, if there had been no misrecognition of the obstacle B2, a straight route RT1 could have been set as the travel route, but since the obstacle B2 has been misrecognized, the travel route is set to a detour route RT2. In this manner, light source noise may interfere with determining an appropriate travel route for the mobile object 100. For this reason, the recognizer 206 of the present embodiment is configured to perform filtering processing of removing light source noise from the result of the recognition of an object around the mobile object 100.

### [Filtering processing of light source noise]

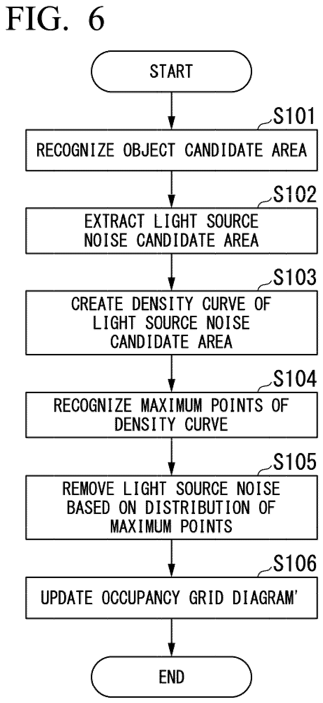

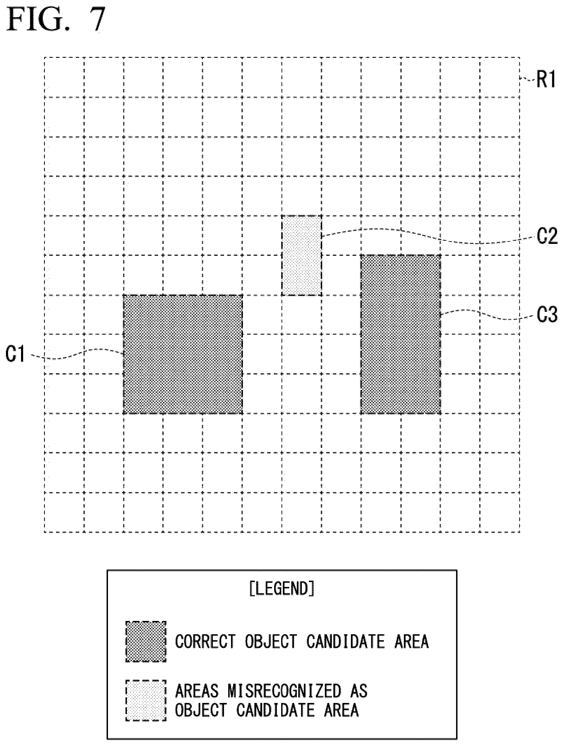

FIG. 6 is a flowchart which shows an example of a flow of processing in which the recognizer 206 recognizes objects around the mobile object 100 while removing light source noise. First, the recognizer 206 recognizes each object candidate area by clustering grid cells in the occupied state in an occupancy grid diagram recognized based on an image (S101). Although the clustering method is arbitrary, for example, a shortest distance method can be used. FIG. 7 is a diagram which shows an example of a result of the recognition of an object candidate area. FIG. 7 shows a case where object candidate areas C1, C2, and C3 disposed similarly to obstacles B1, B2, and B3 in FIG. 5 are recognized.

Subsequently, the recognizer 206 extracts object candidate areas with a small number of grid cells (equal to or less than a threshold value) as light source noise candidate areas (S102), and creates a density curve in the height direction (a Z-axis direction) for point groups included in each extracted light source noise candidate area (S103). This density curve is a sum of the number of point groups present in the light source noise candidate areas for each height. In this sense, the density curve can be referred to as a histogram of point groups in the height direction. The recognizer 206 performs a histogram test on the created density curve to recognize maximum points (S104), and removes light source noise included in a target grid cell based on a distribution of the recognized maximum points (S105). More specifically, when there is a first point group corresponding to an object and a second point group spaced apart in the air (in the height direction) from the first point group, the recognizer 206 removes the second point group as light source noise. For example, the recognizer 206 may consider maximum points of the density curve that are present at a predetermined altitude or higher as being caused by light source noise, and remove a point group positioned at the altitude of the maximum points as light source noise. This is because light source noise is present in the air. Hereinafter, processing of determining whether a recognized point group is light source noise will be referred to as noise determination processing.

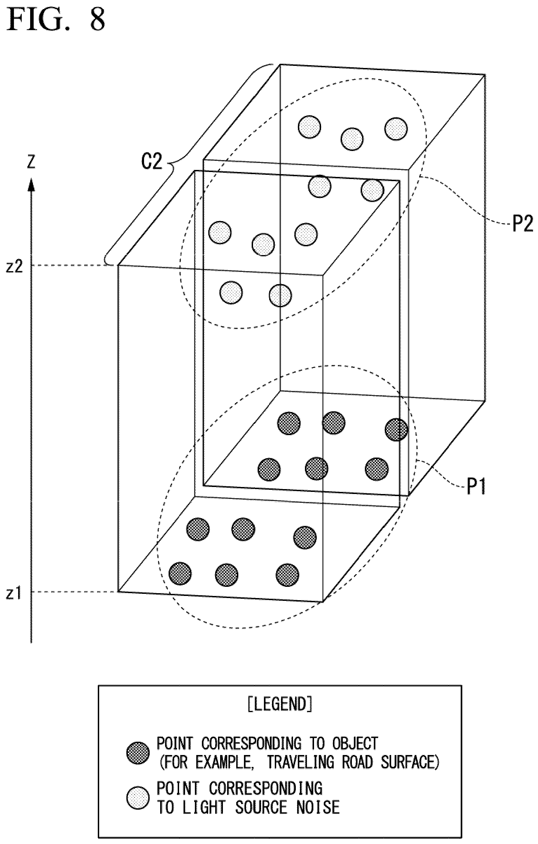

FIG. 8 is a diagram which shows an example of an object candidate area C2 extracted as a light source noise candidate area. FIG. 8 is an example of a case in which a threshold value of the number of grid cells when a light source noise candidate area is extracted is set to 2 or more and 5 or less for the object candidate areas C1, C2, and C3 in FIG. 7. In this case, the number of grid cells in the object candidate areas C1, C2, and C3 is 9, 2, and 6, respectively, so that, when the threshold value is 2 or more and 5 or less, the object candidate area C2 is extracted as the light source noise candidate area. Hereinafter, the object candidate area C2 may be referred to as the light source noise candidate area C2. FIG. 8 represents a case in which a point group P1 corresponding to a traveling road surface is present at a low position in the height direction (for example, near Z=z1), and a point group P2 corresponding to the light source noise is present in air near a predetermined altitude (for example, near Z=z2) in the light source noise candidate area C2.

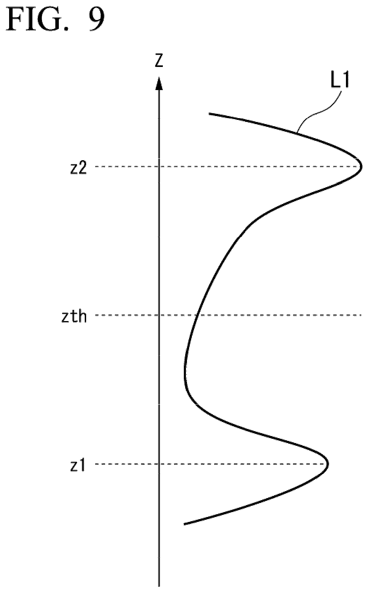

FIG. 9 is a diagram which describes a method for removing a point group corresponding to light source noise from the light source noise candidate area C2. FIG. 9 is a graph which represents a density curve L1 created for the light source noise candidate area C2. In this case, maximum points of the density curve appear near Z=z1 and Z=z2, so that, for example, light source noise in the light source noise candidate area C2 can be removed by filtering a point group whose height is equal to or more than a threshold value zth. The recognizer 206 updates the occupancy grid diagram based on the distribution of the point group after the light source noise is removed (S106). As a result, the occupancy state of a grid group constituting the light source noise candidate area C2 is changed from being occupied to being unoccupied, and the grid group is recognized as a travelable area.

A threshold value for the number of grid cells used when the light source noise candidate area is extracted and a threshold value for a height used when the maximum points caused by light source noise are detected may be adjusted as appropriate depending on an environment in which the mobile object 100 is traveling. In order to prevent a point group corresponding to an actual obstacle from being erroneously removed as light source noise, in addition to the threshold value of a height, filtering conditions may be applied based on distribution characteristics of point groups corresponding to light source noise. For example, as described above, since light source noise occurs in the air in a relatively small range, determination conditions related to a shape of a peak forming the maximum points caused by light source noise may be added. For example, the following determination conditions may be set.
· A peak width is equal to or less than the threshold value (in other words, the peak is sharp and the distribution range is small)
·Minimum points before and after the peak are near 0 degrees (in other words, an empty space)

Since there is a case in which maximum points or minimum points may be formed depending on a shape (for example, unevenness or the like) of an obstacle, a density curve may be discretized over a larger range (in the height direction). By doing so, since the density curve becomes similar to a histogram that represents a frequency (the number of points) for each predetermined width (height direction), fine peaks caused by the shape of the obstacle are smoothed out, making it less likely that they will be misrecognized as being caused by light source noise.

When simple filtering is performed, determination of whether there is light source noise may be performed based on the number of maximum points. For example, in an area where there are no obstacles on the traveling road surface, which is an empty space in the height direction, and where there is no light source noise, since only point groups corresponding to the traveling road surface are detected (that is, only the maximum points corresponding to the traveling road surface are detected), the number of detected maximum points is one. Even if there is an obstacle on the traveling road surface, an area above the obstacle is an empty space, and there is no light source noise, the point group corresponding to the traveling road surface and the obstacle will be detected in a relatively close range, so that, in this case as well, the number of maximum points detected is likely to be one. For this reason, when there is light source noise in the air, the number of maximum points is highly likely to be two. Therefore, the recognizer 206 may be configured to count the number of maximum points on the density curve (or a histogram), determine that there is light source noise when the number of maximum points is two, and filter point groups corresponding to the higher maximum point as light source noise.

**In** the description above, a case in which a density curve is created for light source noise candidate area and light source noise in the light source noise candidate area is removed based on the created density curve is described. However, the creation of the density curve and the removal of the light source noise may be performed for each grid cell constituting the light source noise candidate area.

According to the embodiment described above, it is possible to more accurately recognize or remove light source noise in the occupancy grid diagram recognized from an image of the surroundings of the mobile object 100.

## Claims

1. A mobile object control device (200) comprising:
a storage device (220) that has stored a program; and
a hardware processor (206),
wherein the hardware processor (206) executes a program stored in the storage device (220), thereby
recognizing an object (B1, B2, B3) present around the mobile object (100) as a point group (P1, P2) in three-dimensional space based on an image of surrounding situations of a mobile object (100), the image being divided into unit areas, and
determining a moving route (RT1, RT2) of the mobile object (100) based on the surrounding situations, and controlling the mobile object (100) so that the object (B1, B2, B3) moves along the determined moving route (RT1, RT2),
wherein the hardware processor (206) executes noise determination processing for
recognizing a candidate area (C1, C2, C3) that may indicate an area of the object (B1, B2, B3) by clustering unit areas including the point group (P1, P2),
recognizing a candidate area (C2) of a predetermined size or smaller from among the candidate areas (C1, C2, C3) as a candidate area (C2) for light source noise,
calculating a curve (L1) indicating distribution in a height direction of the point group (P1, P2) in the candidate area (C2) for the light source noise, and
determining whether light source noise is included in the point group (P2) in the candidate area for the light source noise based on the number of maximum points included in the curve (L1),
wherein the hardware processor (206) executes the noise determination processing for each unit area included in the candidate area (C2) for the light source noise.

2. The mobile object control device (200) according to claim 1,
wherein, when the hardware processor (206) determines that light source noise is included in a point group (P2) in the predetermined area based on the number of maximum points, the hardware processor (206) removes the light source noise from the point group (P2) in the predetermined area.

3. The mobile object control device (200) according to claim 1,
wherein the hardware processor (206) determines that light source noise is included in a point group (P2) in the predetermined area when the number of maximum points of the curve (L1) is two.

4. A mobile object control method in which a computer executes recognition processing for recognizing an object (B1, B2, B3) present around the mobile object (100) as a point group (P1, P2) in three-dimensional space based on an image of surrounding situations of a mobile object (100), the image being divided into unit areas, and control processing for determining a moving route (RT1, RT2) of the mobile object (100) based on the surrounding situations and controlling the mobile object (100) to move along the determined moving route (RT1, RT2), wherein the computer performs a noise determination process comprising:
recognizing a candidate area (C1, C2, C3) that may indicate an area of the object (B1, B2, B3) by clustering unit areas including the point group (P1, P2),
recognizing a candidate area (C2) of a predetermined size or smaller from among the candidate areas (C1, C2, C3) as a candidate area (C2) for light source noise,
calculating a curve (L1) indicating distribution in a height direction of the point group (P1, P2) in the candidate area (C2) for the light source noise, and
determining whether light source noise is included in the point group (P2) in the candidate area (C2) for the light source noise based on the number of maximum points included in the curve (L1),
wherein the noise determination processing is performed for each unit area included in the candidate area (C2) for the light source noise.

5. A computer-readable non-transitory storage medium (220) that has stored a program for causing a computer to execute:
recognition processing for recognizing an object (B1, B2, B3) present around the mobile object (100) as a point group (P1, P2) in three-dimensional space based on an image of surrounding situations of a mobile object (100), the image being divided into unit areas, and
control processing for determining a moving route (RT1, RT2) of the mobile object (100) based on the surrounding situations and controlling the mobile object (100) to move along the determined moving route (RT1, RT2),
wherein the computer executes noise determination processing for
recognizing a candidate area (C1, C2, C3) from among the unit areas that may indicate an area of the object (B1, B2, B3) based on a clustering results of points included within each unit area,
recognizing a candidate area (C2) of a predetermined size or smaller from among the candidate areas (C1, C2, C3) as a candidate area (C2) for light source noise,
calculating a curve (L1) indicating distribution in a height direction of the point group (P1, P2) in the candidate area (C2) for light source noise, and
determining whether light source noise is included in the point group (P2) in the candidate area (C2) for light source noise based on the number of maximum points included in the curve (L1),
wherein the noise determination processing is performed for each unit area included in the candidate area (C2) for the light source noise.

## Patentansprüche

1. Steuerungsvorrichtung (200) für ein mobiles Objekt, umfassend:
eine Speichervorrichtung (220), welche ein Programm gespeichert hat; und
einen Hardware-Prozessor (206),
wobei der Hardware-Prozessor (206) ein in der Speichervorrichtung (220) gespeichertes Programm ausführt, wodurch
ein Objekt (B1, B2, B3), welches um das mobile Objekt (100) herum vorhanden ist, als eine Punktgruppe (P1, P2) in einem dreidimensionalen Raum basierend auf einem Bild von Umgebungssituationen eines mobilen Objekts (100) erkannt wird, wobei das Bild in Einheitsbereiche unterteilt ist, und
eine Bewegungsroute (RT1, RT2) des mobilen Objekts (100) basierend auf den Umgebungssituationen bestimmt wird und das mobile Objekt (100) so gesteuert wird, dass das Objekt (B1, B2, B3) sich entlang der bestimmten Bewegungsroute (RT1, RT2) bewegt,
wobei der Hardware-Prozessor (206) eine Rauschbestimmungsverarbeitung ausführt zum
Erkennen eines Kandidatenbereichs (C1, C2, C3), welcher einen Bereich des Objekts (B1, B2, B3) indizieren kann, durch Clustering von Einheitsbereichen, welche die Punktgruppe (P1, P2) umfassen,
Erkennen eines Kandidatenbereichs (C2) einer vorbestimmten Größe oder kleiner aus den Kandidatenbereichen (C1, C2, C3) als einen Kandidatenbereich (C2) für Lichtquellen-Rauschen,
Berechnen einer Kurve (L1), welche eine Verteilung in einer Höhenrichtung der Punktgruppe (P1, P2) in dem Kandidatenbereich (C2) für das Lichtquellen-Rauschen indiziert, und
Bestimmen, ob Lichtquellen-Rauschen in der Punktgruppe (P2) in dem Kandidatenbereich für das Lichtquellen-Rauschen enthalten ist, basierend auf der Anzahl von Maximalpunkten, welche in der Kurve (L1) enthalten sind,
wobei der Hardware-Prozessor (206) die Rauschbestimmungsverarbeitung für jeden Einheitsbereich ausführt, welcher in dem Kandidatenbereich (C2) für das Lichtquellen-Rauschen enthalten ist.

2. Steuerungsvorrichtung (200) für ein mobiles Objekt nach Anspruch 1,
wobei, wenn der Hardware-Prozessor (206) bestimmt, dass Lichtquellen-Rauschen in einer Punktgruppe (P2) in dem vorbestimmten Bereich enthalten ist, basierend auf der Anzahl von Maximalpunkten, der Hardware-Prozessor (206) das Lichtquellen-Rauschen aus der Punktgruppe (P2) in dem vorbestimmten Bereich entfernt.

3. Steuerungsvorrichtung (200) für ein mobiles Objekt nach Anspruch 1,
wobei der Hardware-Prozessor (206) bestimmt, dass Lichtquellen-Rauschen in einer Punktgruppe (P2) in dem vorbestimmten Bereich enthalten ist, wenn die Anzahl von Maximalpunkten der Kurve (L1) zwei beträgt.

4. Steuerungsverfahren für ein mobiles Objekt, bei welchem ein Computer eine Erkennungsverarbeitung ausführt zum Erkennen eines Objekts (B1, B2, B3), welches um das mobile Objekt (100) herum vorhanden ist, als eine Punktgruppe (P1, P2) in einem dreidimensionalen Raum basierend auf einem Bild von Umgebungssituationen eines mobilen Objekts (100), wobei das Bild in Einheitsbereiche unterteilt ist, und eine Steuerungsverarbeitung zum Bestimmen einer Bewegungsroute (RT1, RT2) des mobilen Objekts (100) basierend auf den Umgebungssituationen und zum Steuern des mobilen Objekts (100), sodass es sich entlang der bestimmten Bewegungsroute (RT1, RT2) bewegt, wobei der Computer eine Rauschbestimmungsverarbeitung durchführt, umfassend:
Erkennen eines Kandidatenbereichs (C1, C2, C3), welcher einen Bereich des Objekts (B1, B2, B3) indizieren kann, durch Clustering von Einheitsbereichen, welche die Punktgruppe (P1, P2) umfassen,
Erkennen eines Kandidatenbereichs (C2) einer vorbestimmten Größe oder kleiner aus den Kandidatenbereichen (C1, C2, C3) als einen Kandidatenbereich (C2) für Lichtquellen-Rauschen,
Berechnen einer Kurve (L1), welche eine Verteilung in einer Höhenrichtung der Punktgruppe (P1, P2) in dem Kandidatenbereich (C2) für das Lichtquellen-Rauschen indiziert, und
Bestimmen, ob Lichtquellen-Rauschen in der Punktgruppe (P2) in dem Kandidatenbereich (C2) für das Lichtquellen-Rauschen enthalten ist, basierend auf der Anzahl von Maximalpunkten, welche in der Kurve (L1) enthalten sind,
wobei die Rauschbestimmungsverarbeitung für jeden Einheitsbereich durchgeführt wird, welcher in dem Kandidatenbereich (C2) für das Lichtquellen-Rauschen enthalten ist.

5. Computerlesbares, nicht-transitorisches Speichermedium (220), welches ein Programm gespeichert hat, um einen Computer zu veranlassen, auszuführen:
eine Erkennungsverarbeitung zum Erkennen eines Objekts (B1, B2, B3), welches um das mobile Objekt (100) herum vorhanden ist, als eine Punktgruppe (P1, P2) in einem dreidimensionalen Raum basierend auf einem Bild von Umgebungssituationen eines mobilen Objekts (100), wobei das Bild in Einheitsbereiche unterteilt ist, und
eine Steuerungsverarbeitung zum Bestimmen einer Bewegungsroute (RT1, RT2) des mobilen Objekts (100) basierend auf den Umgebungssituationen und zum Steuern des mobilen Objekts (100), sodass es sich entlang der bestimmten Bewegungsroute (RT1, RT2) bewegt,
wobei der Computer eine Rauschbestimmungsverarbeitung ausführt zum
Erkennen eines Kandidatenbereichs (C1, C2, C3) aus den Einheitsbereichen, welcher einen Bereich des Objekts (B1, B2, B3) indizieren kann, basierend auf Clustering-Ergebnissen von Punkten, welche innerhalb jedes Einheitsbereichs enthalten sind,
Erkennen eines Kandidatenbereichs (C2) einer vorbestimmten Größe oder kleiner aus den Kandidatenbereichen (C1, C2, C3) als einen Kandidatenbereich (C2) für Lichtquellen-Rauschen,
Berechnen einer Kurve (L1), welche eine Verteilung in einer Höhenrichtung der Punktgruppe (P1, P2) in dem Kandidatenbereich (C2) für das Lichtquellen-Rauschen indiziert, und
Bestimmen, ob Lichtquellen-Rauschen in der Punktgruppe (P2) in dem Kandidatenbereich (C2) für das Lichtquellen-Rauschen enthalten ist, basierend auf der Anzahl von Maximalpunkten, welche in der Kurve (L1) enthalten sind,
wobei die Rauschbestimmungsverarbeitung für jeden Einheitsbereich durchgeführt wird, welcher in dem Kandidatenbereich (C2) für das Lichtquellen-Rauschen enthalten ist.

## Revendications

1. Dispositif de commande d'objet mobile (200) comportant :
un dispositif de stockage (220) qui stocke un programme ; et
un processeur matériel (206),
dans lequel le processeur matériel (206) exécute un programme stocké dans le dispositif de stockage (220) pour réaliser :
la reconnaissance d'un objet (B1, B2, B3) présent autour de l'objet mobile (100) en tant que groupe de points (P1, P2) dans un espace tridimensionnel sur la base d'une image de situations environnantes d'un objet mobile (100), l'image étant divisée en zones unitaires, et
la détermination d'un itinéraire de déplacement (RT1, RT2) de l'objet mobile (100) sur la base des situations environnantes, et la commande de l'objet mobile (100) de sorte que l'objet (B1, B2, B3) se déplace le long de l'itinéraire de déplacement (RT1, RT2) déterminé,
dans lequel le processeur matériel (206) exécute un traitement de détermination de bruit pour
la reconnaissance d'une zone candidate (C1, C2, C3) qui peut indiquer une zone de l'objet (B1, B2, B3) par regroupement de zones unitaires incluant le groupe de points (P1, P2),
la reconnaissance d'une zone candidate (C2) d'une taille prédéterminée ou inférieure parmi les zones candidates (C1, C2, C3) en tant que zone candidate (C2) pour un bruit de source lumineuse,
le calcul d'une courbe (L1) indiquant une répartition dans une direction de hauteur du groupe de points (P1, P2) dans la zone candidate (C2) pour le bruit de source lumineuse, et
le fait de déterminer si un bruit de source lumineuse est inclus dans le groupe de points (P2) dans la zone candidate pour le bruit de source lumineuse sur la base du nombre de points maximum inclus dans la courbe (L1),
dans lequel le processeur matériel (206) exécute le traitement de détermination de bruit pour chaque zone unitaire incluse dans la zone candidate (C2) pour le bruit de source lumineuse.

2. Dispositif de commande d'objet mobile (200) selon la revendication 1, dans lequel, lorsque le processeur matériel (206) détermine qu'un bruit de source lumineuse est inclus dans un groupe de points (P2) dans la zone prédéterminée sur la base du nombre de points maximum, le processeur matériel (206) supprime le bruit de source lumineuse du groupe de points (P2) dans la zone prédéterminée.

3. Dispositif de commande d'objet mobile (200) selon la revendication 1, dans lequel le processeur matériel (206) détermine qu'un bruit de source lumineuse est inclus dans un groupe de points (P2) dans la zone prédéterminée lorsque le nombre de points maximum de la courbe (L1) est égal à deux.

4. Procédé de commande d'objet mobile dans lequel un ordinateur exécute un traitement de reconnaissance pour reconnaître un objet (B1, B2, B3) présent autour de l'objet mobile (100) en tant que groupe de points (P1, P2) dans un espace tridimensionnel sur la base d'une image de situations environnantes d'un objet mobile (100), l'image étant divisée en zones unitaires, et un traitement de commande pour déterminer un itinéraire de déplacement (RT1, RT2) de l'objet mobile (100) sur la base des situations environnantes et commander l'objet mobile (100) pour qu'il se déplace le long de l'itinéraire de déplacement (T1, RT2) déterminé, dans lequel l'ordinateur effectue un processus de détermination de bruit comportant :
la reconnaissance d'une zone candidate (C1, C2, C3) qui peut indiquer une zone de l'objet (B1, B2, B3) par regroupement de zones unitaires incluant le groupe de points (P1, P2),
la reconnaissance d'une zone candidate (C2) d'une taille prédéterminée ou inférieure parmi les zones candidates (C1, C2, C3) en tant que zone candidate (C2) pour un bruit de source lumineuse,
le calcul d'une courbe (L1) indiquant une répartition dans une direction de hauteur du groupe de points (P1, P2) dans la zone candidate (C2) pour le bruit de source lumineuse, et
le fait de déterminer si le bruit de source lumineuse est inclus dans le groupe de points (P2) dans la zone candidate (C2) pour le bruit de source lumineuse sur la base du nombre de points maximum inclus dans la courbe (L1),
dans lequel le traitement de détermination de bruit est effectué pour chaque zone unitaire incluse dans la zone candidate (C2) pour le bruit de source lumineuse.

5. Support de stockage non transitoire lisible par ordinateur (220) qui stocke un programme pour amener un ordinateur à exécuter :
un traitement de reconnaissance pour reconnaître un objet (B1, B2, B3) présent autour de l'objet mobile (100) en tant que groupe de points (P1, P2) dans un espace tridimensionnel sur la base d'une image de situations environnantes d'un objet mobile (100), l'image étant divisée en zones unitaires, et
un traitement de commande pour déterminer un itinéraire de déplacement (RT1, RT2) de l'objet mobile (100) sur la base des situations environnantes et commander l'objet mobile (100) pour qu'il se déplace le long de l'itinéraire de déplacement (RT1, RT2) déterminé,
dans lequel l'ordinateur exécute un traitement de détermination de bruit pour réaliser
la reconnaissance d'une zone candidate (C1, C2, C3) parmi les zones unitaires qui peuvent indiquer une zone de l'objet (B1, B2, B3) sur la base d'un résultat de regroupement de points inclus au sein de chaque zone unitaire,
la reconnaissance d'une zone candidate (C2) d'une taille prédéterminée ou inférieure parmi les zones candidates (C1, C2, C3) en tant que zone candidate (C2) pour un bruit de source lumineuse,
le calcul d'une courbe (L1) indiquant une répartition dans une direction de hauteur du groupe de points (P1, P2) dans la zone candidate (C2) pour le bruit de source lumineuse, et
le fait de déterminer si le bruit de source lumineuse est inclus dans le groupe de points (P2) dans la zone candidate (C2) pour le bruit de source lumineuse sur la base du nombre de points maximum inclus dans la courbe (L1),
dans lequel le traitement de détermination de bruit est effectué pour chaque zone unitaire incluse dans la zone candidate (C2) pour le bruit de source lumineuse.
